# EUROPEAN PATENT APPLICATION

(11) **EP 2 418 097 A1**
(43) Date of publication of application: **15.02.2012**
(21) Application number: 10783439.2
(22) Date of filing: 03.06.2010
(51) Int. Cl.: B60B 21/00, B60C 17/00

(54) **WHEEL RIM, AND WHEEL AND VEHICLE USING SAME**

(30) Priority: 04.06.2009 JP 2009135307
(71) Applicant: Sumitomo Rubber Industries, Ltd., Kobe-shi, Hyogo 651-0072 (JP)
(72) Inventor: HINO Hidehiko, Kobe-shi Hyogo 651-0072 (JP)
(74) Representative: Manitz, Finsterwald & Partner GbR
(86) International application number: PCT/JP2010/059442
(87) International publication number: WO 2010/140657

(57) **Abstract**

A wheel rim configured to enhance the durability of the tire by reducing the temperature of the tire during running. A wheel rim 1 consisting of a metallic material and adapted so that a pneumatic tire 2 is mounted thereon, wherein a coating 5 having high heat emissivity is formed on at least a part of the surface of the wheel rim 1.

## Description

### TECHNICAL FIELD

The present invention rel ates to a wheel rim configured to enhance the durability of the tire by reducing the temperature of the tire duri ng runni ng, and rel ates to a wheel and a vehicle usi ng the wheel rim.

### BACKGROUND OF THE INVENTION

A tire deflects repeatedly during running, and heat generates in a rubber portion of the tire. Owing to the heat generation, the heat deteriorates the rubber portion; eventually, the ti re comes to destruction. Such destruction occurs from a side portion and a bead portion of the ti re which highly deforms during running. To prevent the destruction of the tire, those in the art had tried to reduce an amount of the deformation previously. For example, following methods were proposed:
a method of using hard rubber for the bead apex positioned in the bead portion,
a method of sizing up the bead apex,
a method of reinforcing the bead portion with a bead filler made of cord material, and/or
a method of improving rigidity of a carcass cord.

However, each of the above methods had increased a tire weight and a longitudinal spring constant. In the conventional methods, there was a problem of increasing unsprung weight of the vehicle, deteriorating steering stability, and causing deteriorations of ride comfort and fuel efficiency.

Therefore, the inventor of the present invention earnestly studied to reduce the increase in temperature of the tire during running, and took particular note of heat radiating from the tire to the vehicle. That is to say, he came to discover that, when providing in at least a part of a surface of the vehicle made of the metallic material with a coating having high heat emissivity, infrared ray (heat energy) radiated from the tire was efficiently transferred from the coating to the vehicle and was released to the outside air; and he completed the present invention. Following is a related art of the present invention.
Patent document 1: Japanese unexamined Patent Application Publication No. 2009-73247.

### DISCLOSURE OF THE INVENTION

### PROBLEM TO BE SOLVED BY THE INVENTION

It is therefore, in view of the above-mentioned problems, an object of the present invention to provide a wheel rim enable to improve durability of a tire by transferring efficiently the heat energy from the tire to a wheel rim and by lowering the temperature of the tire, and to provide a wheel and a vehicle using the wheel rim.

### MEANS OF SOLVING THE PROBLEMS

In accordance with claim 1 of the present invention, a metallic wheel rim whereon a pneumatic tire is mounted is characterized by forming a coating having high heat emissivity on at least a part of the surface of the wheel rim.

In accordance with claim 2 of the present invention, in the wheel rim as set forth i n claim 1, the coating is a painted coati ng i n black.

In accordance wi th claim 3 of the present i nventi on, i n the wheel rim as set forth in claim 1 or 2, the coating has heat emissivity of not less than 0.8.

In accordance with claim 4 of the present invention, in the wheel rim as set forth in any one of claims 1 to 3, the coating is formed on a first surface not exposed to the outside air in a tire-mounted state.

In accordance with claim 5 of the present invention, the wheel rim as set forth in claim 4 comprises a pair of rim sheet portions positioned in both outsi de portion in the axial direction of the ti re and mounting bead portions of said pneumatic tire thereon, and a substantially-cylindrical body portion extending therebetween. And, the first surface is an outer circumferential surface of said body portion.

In accordance with claim 6 of the present invention, in the wheel rim as set forth in claim 4 or 5, the coating is also formed on a second surface exposed to the outside air in the ti re-mounted state.

In accordance with claim 7 of the present invention, a wheel comprises the pneumatic tire mounted on the wheel rim as set forth in any one of claims 1 to 6.

In accordance wi th claim 8 of the present invention, in the wheel as set forth in claim 7, the pneumatic tire is a run flat tire.

In accordance with claim 9 of the present invention, a vehicle comprises the wheel as set forth in claim 7 or 8.

### EFFECTS OF THE INVENTION

According to the embodiment of claim 1, the pneumatic tire is mounted on the metallic wheel rim, and the coating having high heat emissivity is formed on at least a part of the surface of the wheel rim. Therefore, the heat energy radiated form the tire transfers efficiently to the vehicle through the coating having high heat absorptance, and is released to the outside. Therefore, the increase of the ti re temperature during running can be reduced, and the tire durability improves.

According to the embodiment of claim 2 or 3, the painted coating in black or the coating having heat emissivity of not less than 0.8 is used as the coating having high heat absorptance. In this way, the above-mentioned effect is certainly produced because the coating having high heat emissivity also has high heat absorptance.

According to the embodi ment of claim 4, to provi de with the coati ng in the first surface which does not exposed to the outside air in a ti re-mounted state helps efficiently transferring the heat energy of the tire to the vehicle side and helps curbing the increase of the tire temperature. In particular, according to the embodiment of claim 5, it is preferable that the first surface is an outer circumferential surface of the body portion extending between rim sheet portions. The body portion, whi ch is faced with the ti re cavity surface (inner liner, for example), can absorb more efficiently the heat energy radiated from the tire cavity surface

Moreover, in accordance with the embodiment of claim 6, the coating can be formed also in the second surface which is not exposed to the outside air at the tire mounting. In this case, the heat energy from the tire, which is absorbed by the coati ng formed on the surface of the first surface, can efficiently release from the coating formed on the second surface to the outside air. So, the tire temperature can be efficiently reduced through the wheel rim.

According to the embodiment of claim 7 or 9, the above wheel rim is preferably used for the wheel on whi ch the pneumatic tire is mounted and/or for the vehicle comprising such a wheel.

Especially, according to the embodiment of claim 8, when the above-mentioned pneumatic tire is the run flat tire being apt to generate heat, the present invention has profound effects.

### BRIEF EXPLANATION OF DRAWING

[Fig. 1] A cross-sectional view of a wheel made by assembling a ti re and a wheel rim of the present embodiment.
[Fig. 2] A diagrammatic perspective view of the wheel rim.
[Fig. 3] A diagrammatic perspective view of the wheel rim showing another embodiment.
[Fig. 4] A diagrammatic perspective view of the wheel rim showing another embodiment.

### EXPLANATION OF THE REFERENCE

- 1: wheel rim
- 2: Pneumatic tire
- 3: Rim portion
- 4: Disc portion
- 5: Coating
- Sa: First surface
- Sb: second surface

### BEST MODE FOR CARRYING OUT THE INVENTION

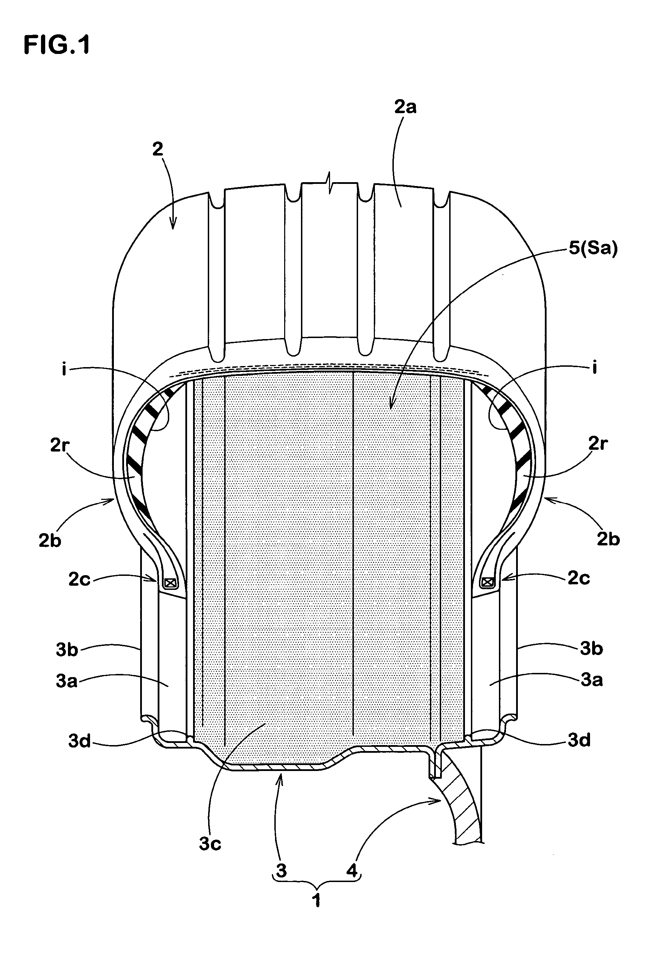

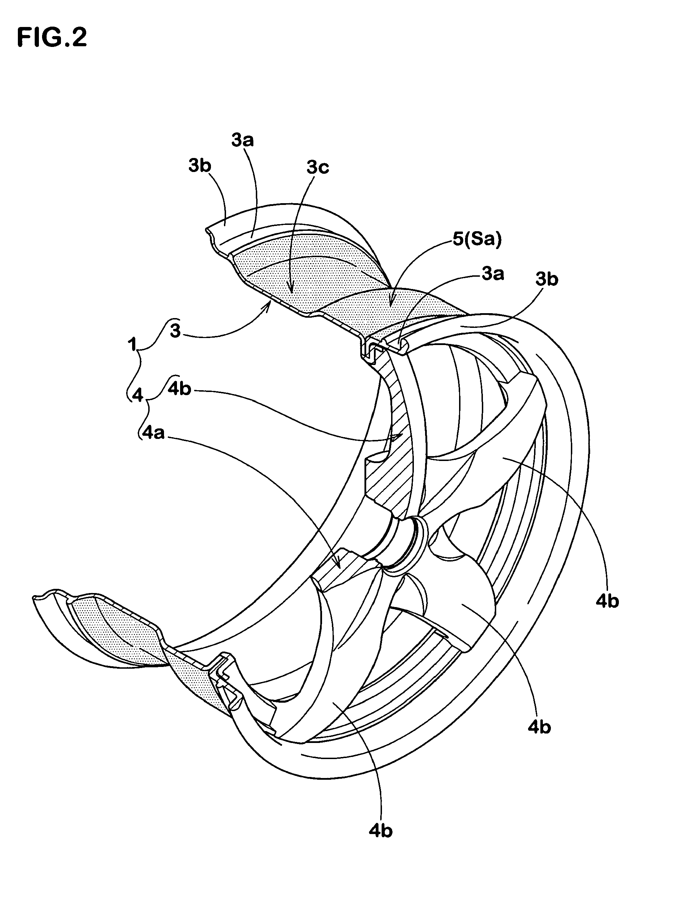

Hereinafter, an embodiment of the present invention will be described with referent to the drawings. As shown in Figs. 1 and 2, the wheel rim 1 of the present embodiment comprises a substantially cylindrical rim portion 3 mounted on a pneumatic tire (hereinafter, simply called "tire") 2 and a disc portion 4 extending in the tire radial direction from an inner circumferential surface of the rim portion 3.

The above-mentioned pneumatic tire 2 comprises a tread portion 2a, a pair of sidewall portions 2b extending inwardly in the tire radial direction from the both sides, and a bead portion 2c formed in an inner end of each of the sidewall portions 2b. And, the pneumatic tire 2 of the present embodiment is a run flat tire provided in a tire cavity surface (i) side of the sidewall portion 2b with a reinforcing rubber 2r having a substantially crescent cross-sectional shape. In such a run flat tire, the reinforcing rubber 2r can hold up the load even if an internal pressure decreases, and the vehicle can run over a distance consistently at a constant speed in safety (run-flat running). Incidentally, it comes near to stating the obvious that the pneumatic tire 2 may be a non-run-flat tire.

The above-mentioned wheel rim 1 is made of metallic material. For the metallic material, for example, various materials such as aluminum alloy, magnesium alloy, titanium alloy, steel and the like are preferably used. And, the wheel rim 1 can be made in various methods such as forging, casting, cutti ng and the like. In this way, the wheel rim 1 of the present embodiment is not to be considered limited about the material and the manufacturing method.

The present embodiment, the above-mentioned rim portion 3 comprises
a pair of rim sheet portions 3a and 3a positioned in both of the axially outside portions and provided with the bead portions 2c of the tire 2;
a flange porti on 3b connected axially outsi de the rim sheet portion 3, extending in the radially outward, and supporting the outside surface of the bead portion 2c; and
a substantially cylindrical body portion 3c extending in the axial direction between the rim sheet portions 3a and 3a.
The rim portion 3 continuously extends in the circumferential direction with substantially the same cross sectional shape in a ring shape. Incidentally, both end portions of the body portion 3c of the wheel rim 1 according to the present embodiment are formed as hump portions 3d of protrusion to prevent positional-shifting of the bead portion 2c.

The above-mentioned disc portion 4 in the present embodiment comprises a hub portion 4a to be fixed to an axle, and five spoke portions 4b. The five spoke portions 4b extend from the hub portion 4a outwardly in the radial direction in a substantially radiating, and the radially outer end thereof fixed on the inner circumferential surface side of the rim portion 3. Incidentally, it comes near to stating the obvious that the shape of the disc portion 4 may variously deform. In Fig. 1, the right-hand side is an outer side of the vehicle.

Additionally, the wheel rim 1 is provided in at least a part of the surface with a coating 5 having high heat emissivity, as shown in Figs. 1 and 2 in a different color. Such a coating can efficiently transfer the heat energy radiated from the tire to the wheel rim 1 side. This helps the suppression of the tire temperature raising during running and the improvement of the tire durability.

As well-known, the above-menti oned heat emissivity (infrared ray heat emissivity), is represented by the proporti on between the amount of energy of the infrared ray having a certain wavelength and radiated from a material object at a certain temperature and the amount of energy radiated from a perfectly blackbody at the same temperature. Every material object radiates infrared ray, that is to say, heat; and the amount thereof differs depends on material and a surface condition. Moreover, the heat emission relates the heat absorption, and they occur at the same rate. That is, the heat emissivity is equal to the absorptance, and a material object capable of emitting the heat is apt to absorb the heat to an equal degree.

To prevent increasing of the tire temperature during running, the inventor took particular note of the heat emissivity of the vehicle which can be kept the heat lower than the tire. That is to say, he discovered that the increase of the tire temperature was efficiently repressed by the improvement of the heat emissivity (**=** absorptance) of the wheel rim 1 when the infrared ray radiated from the tire was efficiently transported to the vehicle's side during running and the heat migration was continuously conducted.

According to the experiments of the inventor, the tire cavity surface (i) (on the inner liner's side) is a rubber in black color, and the heat emissivity is large. Although its heat emissivity depends on surface roughness, the heat emissivity is generally in a range of about from 0.9 to 0.95. However, in a conventional vehicle, the surface is also ordinarily put the polish finishing in metallic color such as silver. Such a wheel rim 1 has very low heat emissivity of about from 0.02 to 0.05. The heat migration into the vehicle di ffers depending on a ti re si ze, but even when the ti re for a standard passenger vehicle tire has a tire temperature of 100 degrees C, the heat migration into the tire is not more than 10 W/m²; and the heat migration owing to the heat emission does not occur in effect.

By contrast, the tire according to the present invention is provided in the wheel rim 1 with a coating 5 having high heat emissivity. The heat migration owing to infrared rays efficiently occurs from the high-temperature ti re 2 to the low-temperature wheel rim 1 side during running, and the increase of the tire temperature is repressed.

The above-mentioned coating 5 can be in a variety of types. The most famous coating is a coating in black; and a painted coating in black formed by putting and hardening a black colorant on a surface of the wheel rim 1 is particularly preferable. Such a coating can be made at low cost and light in weight.

For above-mentioned colorant, the followings can be used: silicone resin, polyamide-imide resin, polyimid resin, fluorine resin, alkyd resin, polyester resin, epoxy resin, polyurethane resin, phenol resin, melamine resin, acrylic resin, vinyl resin, petroleum resin, resin colorant in black consisting primarily of resin such as polyamide resin or cellulose nitrate resin, and carbon black colorant in black and the like, for example.

The coating 5 can be also formed by applying a radiating colorant and the like which has a color other than black and enables to improve emissivity by hardening.

Moreover, the coating 5 is not limited as a painted coating, but it comprises all aspects formed on the surface of the wheel rim 1 in layer-like fashion. For example, the coating 5 can be formed by other than the painting but by surface processing treatments such as chrome-plating in black, baking of ceramic material to improve the heat emissivity, and adhering of ceramic sheet material and the like.

It comes near to stating the obvious that the heat emissivity of the above-mentioned coating 5 is larger than the emissivity of the surface of the wheel rim 1 before coating, but the heat emissivity is preferably not less than 0.80, more preferably not less than 0.85, much more preferably not less than 0.90, the most preferably not less than 0.95. In this way, to confine concretely the value of the heat emissivity helps the heat migration of not less than 100 w/m² from the tire 2 side to the wheel rim 1 side, and the tire temperature can be more certainly repressed. Incidentally, the heat emissivity can be measured with a heat emissivity measuring instrument (D & S AERD manufactured by KYOTO ELECTRONICS MANUFACTURING CO., LTD., for example).

The thickness of the coating 5 is not confined in particular. Ordinarily, the infrared rays having wavelength of about from 3 to 15 µm is emitted from the rubber member of the ti re 2. It is therefore preferable to determine the thickness of the coating 5 so as to absorb the infrared rays having such a wavelength efficiently. Additionally, when the thickness of the coating 5 becomes large, the wheel rim 1 grows in mass. According to species experimentations, when applying the resin colorant in black for the coating 5, the thickness of the coating 5 is preferably in a range of about from 10 to 30 µm

The wheel rim 1 according to the present embodiment, the infrared rays radiated from the tire 2 transfer to the wheel rim 1 through the coating 5 having high heat absorptance efficiently, and the heat is discharged from the wheel rim 1 to the outside air. This represses the increase of the ti re temperature during running; eventually, the tire durability improves. In particular, in the run flat tire, to suppress the increase of the tire temperature brings an advantage of the considerable increase of a run-flat running distance. Therefore, the wheel rim 1 of the present embodiment is preferably the wheel combined with the run flat tire and particularly desirable formed as the vehicle comprising this wheel.

In order to absorb the infrared rays radiated from the tire 2, it is necessary to form the above-mentioned coating 5 at least in the first surface Sa of the wheel rim 1, which is not exposed to the outside air in the tire-mounted state. In particular, to provide the coating 5 on only the first surface Sa brings a benefit of hiding the coating 5 by assembling the tire 2 even thought the coating 5 impairs the design of the wheel rim 1.

In the embodiment shown in Fig. 1, an outer circumferential surface of the body portion 3c of the wheel rim 1 is used as the above-mentioned first surface Sa, and any coating is not formed on the other parts. The above-mentioned coating 5 is continuously formed in the circumferential direction, and formed through a region of at least not less than 50%, more preferably not less than 80% of the surface area of the outer circumferential surface of the body portion 3c. The coating 5 formed on the body portion 3c and the cavity surface (i) of the tire 2 are continuously in face-to-face one another in the circumferential di rection; therefore, the coating 5 can absorb more effectually the heat energy in the tire side. Thus, the heat energy absorbed from the coating 5 is emitted from the inner circumferential surface of the body portion 3c of the wheel rim 1 and from inside surface and outside surface of the disc portion 4 and the like.

Incidentally, it is not necessary to enlarge the heat emissivity of the rim sheet portion 3a to set the bead portion 2 of the tire 2. when the rim sheet portion 3a is provide with the coating 5, it may have a bad effect on the heat transfer between the bead portion 2c and the wheel rim 1. In the present embodiment, among the surfaces which is not exposed to the outside air, on the inside surfaces of the rim sheet portion 3a and the flange portion 3b which contact with the bead portion 2c, the coati ng 5 does not formed, and the metallic materials of the wheel rim 1 are exposed on the surface.

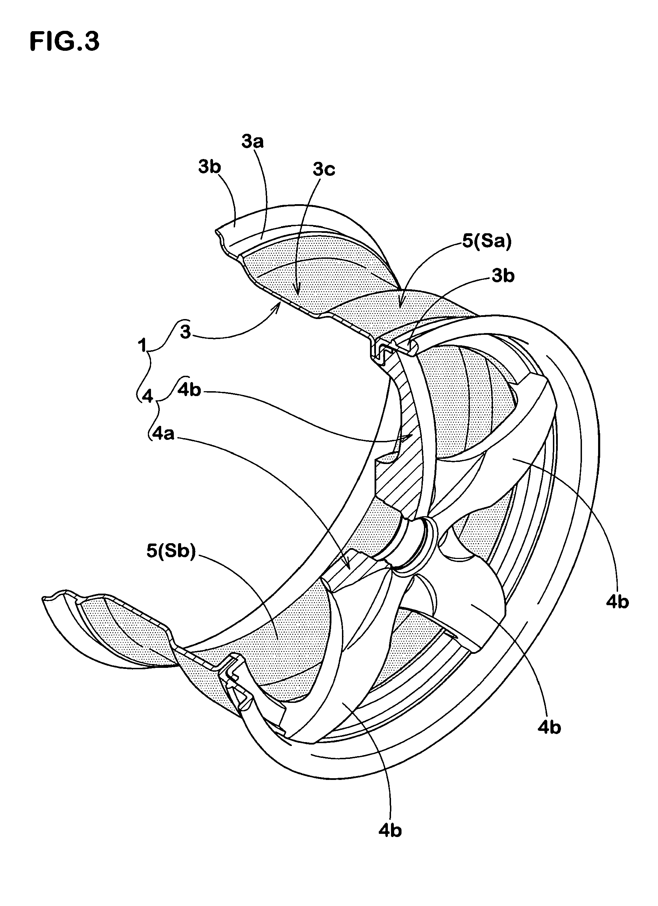

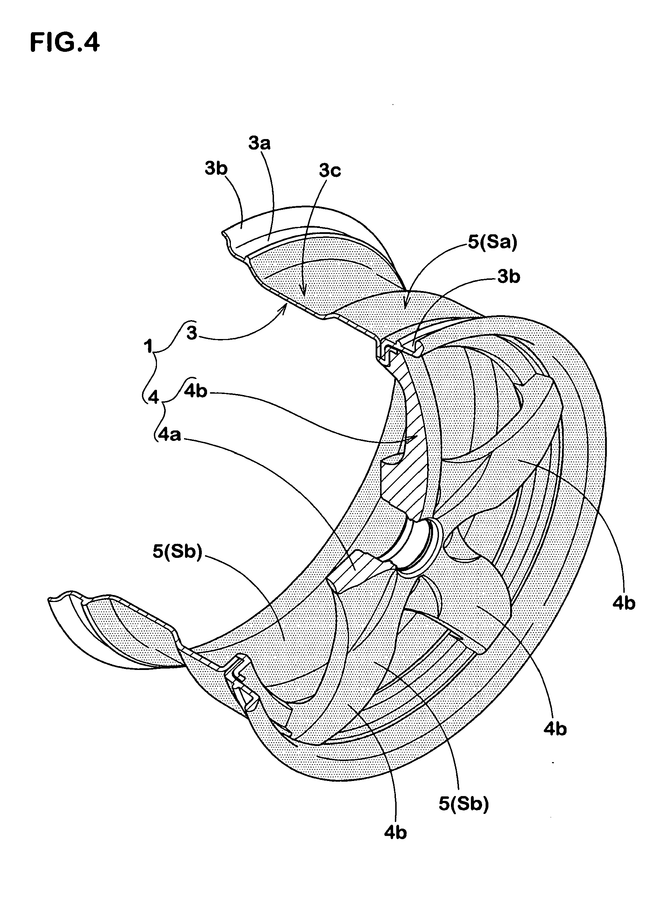

As shown in Figs. 3 and 4, the above-mentioned coating 5 can be formed also on a second surface Sb of the wheel rim 1, which is exposed to the outside air in the ti re-mounted state. In this case, the heat transferred to the wheel rim 1 can be discharged effectually to the outside by the heat emission of the wheel rim 1. That is to say, the wheel rim 1 is cooled down during running by the heat transfer with the outside air; additionally, the heat emission is expected to cool down the wheel rim 1.

The second surface Sb may be the inner circumferential surface of the body portion 3c as shown in Fig. 3, for example. The second surface Sb may be also all of surfaces exposed to the outside air, such as the inner circumferential surface of the body portion 3c and the inside and outside surfaces of the disc portion 4 as shown in Fig. 4. However, among the surfaces exposed to the outside air, when the coating 5 is formed on a region exposed to direct sunlight, the coating 5 absorbs the heat energy of the sunlight, and there is a possibility of increasing the temperature of the wheel rim 1. Therefore, the second surface Sb is preferably determined as the surface not exposed to direct sunlight among the surfaces exposed to the outside air; more particularly, the second surface Sb is preferably determined as the inner circumferential surface of the above-mentioned body portion 3c and the inside surface of the disc 4b.

Although the embodiments in the present invention have been described in detail, needless to say, the invention is not limited to the above-mentioned concrete embodiments, and various modifications can be made.

### EXAMPLE

To ascertain the efficacy of the present invention, test wheel rims (size: 18 x 8 - J) were made based on the basis of the specifications shown in Table 1. On each of the test wheel rims, a painted coating in black was formed with colorant in black (THI-1B) manufactured by TASCOJAPAN CO., LTD.

A run flat tire of 245/40ZR18 was mounted on each of the wheel rims for all wheels of a domestically produced passenger vehicle. From one wheel of the all wheels, a valve core was removed, and the internal pressure thereof was set to be zero. The above-mentioned passenger vehicle ran on a test course (weather: fine; Air temperature: 22 degrees C) at a speed of 60 km/h. Durability test was conducted until the tire broke down. Evaluation was displayed using indices with a running distance of Example 1 being 100. The larger the numeric value was, the better the durability was. The test results are shown in Table 1.

**[Table 1]**

| | Com. Ex. 1 | Ex. 1 | Ex. 2 | Ex. 3 |
|---|---|---|---|---|
| Drawing showing position of coating | No coating | Fig. 2 | Fig. 3 | Fig. 4 |
| Heat emissivity (= absorptance) of coating of first surface | 0.05 | 0.94 | 0.94 | 0.94 |
| Heat emissivity (= absorptance) of coating of second surface | 0.05 | 0.94 | 0.94 | 0.94 |
| Run flat running distance (Index) | 100 | 145 | 160 | 185 |

For the test result, it was confirmed that the running distance increased by a large extent with using the wheel rims of Examples.

## Claims

1. A metallic wheel rim whereon a pneumatic tire is mounted, **characterized by** forming a coating having high heat emissivity on at least a part of the surface of the wheel rim.

2. The wheel rim as set forth in claim 1 wherein said coating is a painted coating in black.

3. The wheel rim as set forth in claim 1 or 2 wherein said coating has heat emissivity of not less than 0.8.

4. The wheel rim as set forth in any one of claims 1 to 3 wherein said coating is formed on a first surface not exposed to the outside air in a tire-mounted state.

5. The wheel rim as set forth in claim 4 wherein
said wheel rim comprises
a pair of rim sheet portions positioned in both outside portion in the axial direction of the tire and mounting bead portions of said pneumatic tire thereon, and
a substantially-cylindrical body portion extending therebetween; and
said fi rst surface is an outer circumferential surface of said body portion.

6. The wheel rim as set forth in claim 4 or 5 wherein
said coati ng is also formed on a second surface exposed to the outside air in a tire-mounted state.

7. A wheel comprising the pneumatic tire mounted on the wheel rim as set forth in any one of claims 1 to 6.

8. The wheel as set forth in claim 7 wherein said pneumatic tire is a run flat tire.

9. A vehicle comprising said wheel as set forth in claim 7 or 8.
